# EUROPÄISCHE PATENTSCHRIFT

(11) **EP 3 728 819 B1**
(45) Veröffentlichungstag und Bekanntmachung des Hinweises auf die Patenterteilung: **07.08.2024**
(21) Anmeldenummer: 18826985.6
(22) Anmeldetag: 12.12.2018
(51) Int. Cl.: F02F 5/00, F16J 15/32, F16J 15/3208, F16J 15/3216, F16J 15/322, F16J 15/3244, F16J 15/56

(54) **DICHTUNGSANORDNUNG**
SEAL ARRANGEMENT
SYSTÈME D'ÉTANCHÉITÉ

(30) Priorität: 21.12.2017 DE 102017011929
(43) Veröffentlichungstag der Anmeldung: 28.10.2020
(73) Patentinhaber: Carl Freudenberg KG, 69469 Weinheim (DE)
(72) Erfinder: LAUER, Frank, 69231 Rauenberg (DE); KOHL, Christian, 69469 Weinheim (DE); KRAMER, Thomas, 64668 Rimbach (DE)
(86) Internationale Anmeldenummer: PCT/EP2018/084459
(87) Internationale Veröffentlichungsnummer: WO 2019/121190

(56) Entgegenhaltungen:
- DE-A1- 2 645 327
- JP-U- S62 858
- US-A- 2 804 325
- US-A1- 2009 001 671
- US-A1- 2009 001 671

## Beschreibung

Die Erfindung betrifft eine Dichtungsanordnung, umfassend ein erstes Dichtelement, welches mit radialer Vorspannung dichtend an einem Maschinenelement anliegt und ein zweites Dichtelement, welches konzentrisch zu dem ersten Dichtelement angeordnet ist und die radiale Anpressung des ersten Dichtelements an das zweite Maschinenelement bewirkt, wobei das erste Dichtelement und das zweite Dichtelement in einer Gehäusebohrung aufgenommen sind.

### Stand der Technik

Derartige Dichtungsanordnungen sind aus dem allgemeinen Maschinenbau bekannt und kommen beispielsweise als Stangendichtung oder Kolbendichtung zur Abdichtung translatorisch bewegter Maschinenelemente zum Einsatz. Das erste Dichtelement liegt dabei an dem Maschinenelement an, wobei eine radiale Anpressung des ersten Dichtelements an das Maschinenelement durch ein zweites Dichtelement erzeugt wird, welches außenumfangsseitig auf dem ersten Maschinenelement angeordnet ist und eine radiale Anpressung des ersten Dichtelements an das Maschinenelement bewirkt. Dabei besteht das erste Dichtelement häufig aus einem polymeren Material mit einer verhältnismäßig geringen Elastizität, während das zweite Dichtelement häufig aus einem elastomeren Material besteht. Beispielsweise ist es bekannt, als zweites Dichtelement einen O-Ring einzusetzen.

US 2,804,325 zeigt einen Radialwellendichtring zur Anordnung zwischen einem Maschinenelement und einem Gehäuse mit einer in Richtung eines abzudichtenden Raumes vorgewölbten Dichtlippe. Die Dichtlippe ist auf der dem Maschinenelement zugewandten Seite mit einer Umhüllung versehen. US 2009/001671 A1 zeigt eine Dichtungsanordnung mit einem zweiteiligen

Dichtelement, gemäß der Präambel von Anspruch 1, welches mit radialer Vorspannung dichtend an einem

Maschinenelement anliegt. Die Dichtungsanordnung umfasst ein dynamisch wirksames Dichtelement mit einem in Umfangsrichtung betrachteten sinusförmigen Verlauf einer Dichtlippe.

DE 26 45 327 A1 zeigt eine ringförmige Verbunddichtung. Die Verbunddichtung umfasst eine äußere, ringförmige Hülle und einen in der Hülle angeordneten Kern. JP S62 858 U zeigt einen Nutring.

Damit eine derartige Dichtungsanordnung sicher fixiert ist, ist häufig ein nutförmiger Aufnahmeraum für die Dichtungsanordnung in dem Gehäuse vorgesehen.

Bei den aus dem Stand der Technik bekannten Dichtungsanordnungen ist nachteilig, dass die Gehäusebohrung, bzw. der nutförmige Aufnahmeraum mit dem abzudichtenden Medium in Berührung steht und dass sich ein Totraum ergeben kann, in welchem abzudichtendes Medium verbleibt. Daher sind derartige Dichtungsanordnungen nicht zum Einsatz in der Lebensmitteltechnik geeignet.

Dieselbe Problematik ergibt sich auch bei Verwendung bekannter Radialwellendichtringe für rotatorische Anwendungen. Bei diesen ergibt sich beispielsweise ein ringförmiger Totraum zwischen Tragring und Dichtlippe. Darüber hinaus sind derartige Radialwellendichtringe bei Druckbeaufschlagung nur bedingt geeignet.

### Darstellung der Erfindung

Der Erfindung liegt die Aufgabe zugrunde, eine Dichtungsanordnung bereitzustellen, welche bei guter Dichtwirkung für den Einsatz in der Lebensmitteltechnologie geeignet ist.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst die Dichtungsanordnung ein erstes Dichtelement, welches mit radialer Vorspannung dichtend an einem Maschinenelement anliegt und ein zweites Dichtelement, welches konzentrisch zu dem ersten Dichtelement angeordnet ist und die radiale Anpressung des ersten Dichtelements an das erste Maschinenelement bewirkt, wobei das erste Dichtelement und das zweite Dichtelement in einer Gehäusebohrung aufgenommen sind, wobei das erste Dichtelement und das zweite Dichtelement den Spalt zwischen Gehäusebohrung und Maschinenelement abdichten, wobei das erste Dichtelement und das zweite Dichtelement zumindest auf der dem abzudichtenden Raum zugewandten Stirnseite entlang einer Radialebene eben ausgebildet sind und zueinander fluchten und damit eine ebene und totraumfreie Fläche bilden.

Dabei sind das erste Dichtelement und das zweite Dichtelement so angeordnet, dass diese von einer Gehäusebohrung aufgenommen werden können. Es ist nicht erforderlich, einen nutförmigen Aufnahmeraum in dem Gehäuse bereitzustellen. Der Spalt, der sich zwischen der Gehäusebohrung und dem Maschinenelement ergibt, wird von dem ersten Dichtelement und dem zweiten Dichtelement so ausgefüllt, dass kein abzudichtendes Medium in den Spalt zwischen Gehäusebohrung und Maschinenelement eindringen kann. Insofern ist die erfindungsgemäße Dichtungsanordnung insbesondere zum Einsatz in der Lebensmitteltechnologie geeignet.

Das erste Dichtelement und/oder das zweite Dichtelement können im wesentlichen zylinderförmig ausgebildet sein. Im Zusammenspiel mit einer zylinderförmig ausgestalteten Gehäusebohrung ergibt sich dabei der Vorteil, dass das erste Dichtelement und das zweite Dichtelement nach Montage in die Gehäusebohrung die Gehäusebohrung so ausfüllen, dass kein abzudichtendes Medium in die Gehäusebohrung eindringen kann. Insbesondere ist hierbei vorteilhaft, dass kein Totraum entsteht, in welchem abzudichtendes Medium verbleiben kann.

Die dem abzudichtenden Raum zugewandten Stirnseiten von erstem Dichtelement und zweitem Dichtelement sind vorzugsweise kreisringförmig ausgebildet. Dadurch ergibt sich gegenüber dem abzudichtenden Raum mit dem abzudichtenden Medium eine ebene, plane Fläche, gebildet von erstem Dichtelement und zweitem Dichtelement. Bei dieser Ausgestaltung entstehen keinerlei Toträume, in welchem abzudichtendes Medium verbleiben kann. Die Gehäusebohrung ist durch das erste Dichtelement und das zweite Dichtelement so verschlossen, dass kein abzudichtendes Medium eindringen kann.

Eine derart ausgestaltete Dichtungsanordnung eignet sich insbesondere für eine Clean-In-Place-Reinigung (CIP-Reinigung). Bei einer CIP-Reinigung werden die Komponenten einer lebensmitteltechnischen Anlage, wie beispielsweise die Dichtungsanordnung an Ort und Stelle - ohne Demontage - gereinigt. Die erfindungsgemäße Dichtungsanordnung ist für eine derartige CIP-Reinigung besonders geeignet, weil kein Reinigungsmittel oder Produktrest in Toträumen, wie etwa Spalten oder Nuten verbleiben kann.

Eine weitere Verbesserung insbesondere unter hygienischen Gesichtspunkten ergibt sich, wenn auf die Gehäusebohrung des Gehäuses mit den Stirnseiten der Dichtelemente fluchtet.

Das erste Dichtelement kann aus polymerem Werkstoff ausgebildet sein. Ein besonders geeigneter polymerer Werkstoff ist PTFE oder ein PTFE-Compound mit Füllstoffen. PTFE weist eine besonders geringe Reibung auf und ist gegenüber den meisten abzudichtenden Medien, insbesondere den meisten abzudichtenden Medien aus dem Bereich der Lebensmitteltechnologie resistent. Des Weiteren ist PTFE gegenüber den bei einer CIP-Reinigung verwendeten Reinigungsmittel resistent.

Das zweite Dichtelement kann aus elastomerem Werkstoff ausgebildet sein. Dabei bewirkt das zweite Dichtelement eine konstante Anpressung des ersten Dichtelements an das Maschinenelement. Ein vorteilhafter elastomerer Werkstoff für den Einsatz in der Lebensmitteltechnologie ist Fluorkautschuk. Vergleichbar zu PTFE ist Fluorkautschuk gegenüber den meisten Medien resistent und darüber hinaus über ein weites Temperaturspektrum einsetzbar.

Das erste Dichtelement kann formschlüssig mit dem zweiten Dichtelement verbunden sein. Dazu können das erste Dichtelement und das zweite Dichtelement eine Formschlussgeometrie aufweisen. Dazu kann das erste Dichtelement beispielsweise eine umlaufende rechteckförmige oder sägezahnförmige Erhebung aufweisen und das zweite Dichtelement weist innenumfangsseitig eine zu der Erhebung des ersten Dichtelements kongruente Vertiefung auf. Dabei verrasten das erste Dichtelement und das zweite Dichtelement nach Montage miteinander, so dass sich diese nicht ungewollt voneinander lösen können. Eine derartige Ausgestaltung ist insbesondere dann vorteilhaft, wenn eine Abdichtung translatorisch bewegter Maschinenelemente erfolgen soll.

Das erste Dichtelement kann innenumfangsseitig, also mit der dem Maschinenelement zugewandten Fläche, mit einer Rückförderstruktur versehen sein. Dabei ist die Rückförderstruktur vorzugsweise so ausgebildet, dass Medium in Richtung des abzudichtenden Raumes zurückgefördert wird. Dabei kann die Rückfördergeometrie beispielsweise in Form einer schraubenförmigen Nutgeometrie in das erste Dichtelement eingebracht sein.

Vorzugsweise ist die Rückfördergeometrie zum abzudichtenden Raum durch eine umlaufende Wulst geschlossen. Durch die umlaufende Wulst ergibt sich eine statische Abdichtung, so dass insbesondere bei Stillstand verhindert werden kann, dass Medien aus dem abzudichtenden Raumes strömen.

Das erste Dichtelement kann sich zumindest abschnittsweise an der Gehäusebohrung abstützen. Dies ist insbesondere dann vorteilhaft, wenn auf der Seite des abzudichtenden Mediums ein höherer Druck herrscht, welcher zum Abscheren des ersten Dichtelements von dem zweiten Dichtelement führen könnte.

Aus dem zweiten Dichtelement kann eine Schutzlippe ausgebildet sein, welche von dem zweiten Dichtelement in radialer und axialer Richtung abragt und welche das erste Dichtelement zumindest abschnittsweise überdeckt. Dabei steht die Schutzlippe in Richtung der Umgebungsseite vor.

Das zweite Dichtelement kann außenumfangsseitig abgeschrägt sein. Dabei ist das zweite Dichtelement vorzugsweise konisch abgeschrägt. Dadurch ergibt sich zwischen Gehäuse und zweitem Dichtelement ein ringförmiger Ausgleichsraum mit dreieckigem Querschnitt. Der Raum steht dabei nicht in Verbindung mit dem Medienraum, so dass sich auch hier kein Totraum mit abzudichtendem Medium ergibt. Durch den Ausgleichsraum können thermische Dehnungen und durch Einwirken von Medien verursachte Quellungen der Dichtelemente kompensiert werden. Dadurch kann eine konstante radiale Anpressung des ersten Dichtelementes an das abzudichtende Maschinenelement gewährleistet werden. Um den Ausgleichsraum bei eindringenden Medien - beispielsweise aufgrund einer vorübergehenden Leckage an der dynamischen Abdichtstelle - zu entleeren, kann der Ausgleichsraum über einen Kanal mit der Umgebung verbunden sein.

### Kurzbeschreibung der Zeichnung

Einige Ausgestaltungen der erfindungsgemäßen Dichtungsanordnung werden nachfolgend anhand der Figuren näher erläutert. Diese zeigen, jeweils schematisch:
- Fig. 1: eine Dichtungsanordnung mit Rückförderstruktur;
- Fig. 2: eine Dichtungsanordnung mit Schutzlippe;
- Fig. 3: eine Dichtungsanordnung mit formschlüssiger Verbindung zwischen erstem Dichtelement und zweitem Dichtelement;
- Fig. 4: eine Dichtungsanordnung in Form einer Stangendichtung.

### Ausführung der Erfindung

Die Figuren zeigen eine Dichtungsanordnung 1, umfassend ein erstes Dichtelement 2 und ein zweites Dichtelement 4. Das erste Dichtelement 2 liegt mit radialer Vorspannung dichtend an einem Maschinenelement 3 an. Das zweite Dichtelement 4 liegt außenumfangsseitig auf dem ersten Dichtelement 2 auf, wobei das zweite Dichtelement 4 konzentrisch zu dem ersten Dichtelement 2 angeordnet ist und die radiale Anpressung des ersten Dichtelements 2 an das Maschinenelement 3 bewirkt.

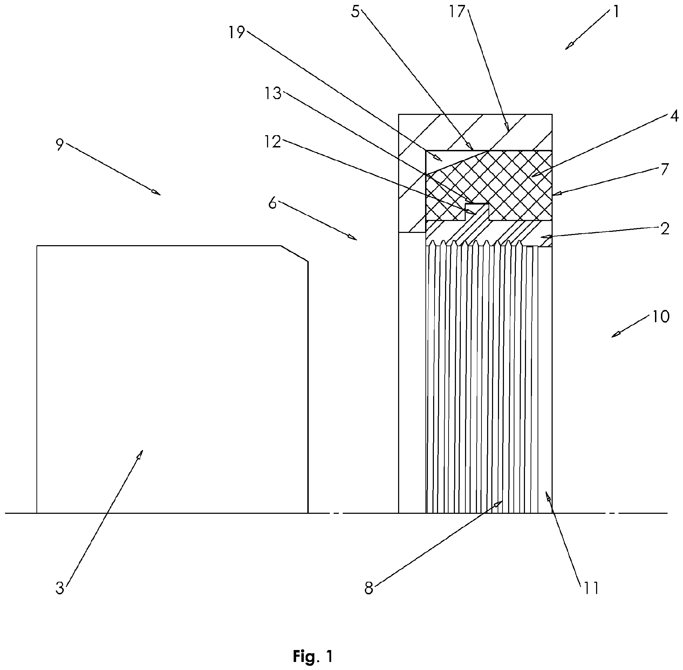

Figur 1 zeigt eine Dichtungsanordnung 1, bei der die dem abzudichtenden Raum 10 zugewandten Stirnseite 7 von erstem Dichtelement 2 und zweitem Dichtelement 4 kreisringförmig ausgebildet sind, so dass die Dichtelemente 2, 4 in einer Radialebene eben ausgebildet sind und zueinander fluchten. Aus dieser Formgebung ergibt sich eine plane und dadurch besonders kleine und geschlossene Fläche der Dichtungsanordnung 1, welche dem abzudichtenden Raum 10 zugewandt ist. Die Fläche ist eben und totraumfrei. Dadurch kann die Dichtungsanordnung 1 besonders einfach gereinigt werden, es ergibt sich eine minimale Medienberührfläche und die Dichtungsanordnung 1 kann mittels CIP-Reinigung gereinigt werden.

Vorliegend fluchten die Dichtelemente 2, 4 auch auf der der Umgebungsseite 9 zugewandten Stirnseite.

Das erste Dichtelement 2 ist aus polymerem, hier aus PTFE ausgebildet und das zweite Dichtelement 4 ist aus elastomerem Werkstoff, hier einem Fluorkautschuk, ausgebildet.

Das zweite Dichtelement 4 liegt mit radialer Vorspannung auf dem ersten Dichtelement 2 auf. Darüber hinaus ist das erste Dichtelement 2 formschlüssig mit dem zweiten Dichtelement 4 verbunden. Dazu weist das erste Dichtelement 2 außenumfangsseitig einen radial nach außen vorstehenden rechteckförmigen Vorsprung 12 auf. Das zweite Dichtelement 4 weist eine zu dem Vorsprung 12 kongruente Vertiefung 13 in Form einer rechteckförmigen Nut auf. Nach Montage rastet der Vorsprung 12 in der Vertiefung 13 ein, so dass das erste Dichtelement 2 und das zweite Dichtelement 4 verliersicher miteinander verbunden sind.

Das erste Dichtelement 2 ist innenumfangsseitig auf der dem Maschinenelement 3 zugewandten Seite mit einer Rückförderstruktur 8 versehen. Die Rückförderstruktur 8 ist vorliegend schraubengangförmig ausgebildet. Zur Bildung der Rückförderstruktur 8 ist eine spiralförmige Nut in das erste Dichtelement 2 eingebracht. Dabei ist die Rückförderstruktur 8 so ausgebildet, dass Medium in Richtung des abzudichtenden Raums 10 gefördert wird. Eine derart mit einer Rückförderstruktur 8 ausgerüstete Dichtungsanordnung 1 eignet sich insbesondere zur Abdichtung rotatorisch bewegter Maschinenelemente 3.

In Richtung des abzudichtenden Raumes 10 ist die Rückförderstruktur 8 durch einen umlaufenden Wulst 11 verschlossen. Daraus ergibt sich eine statische Abdichtung.

Das zweite Dichtelement 4 weist außenumfangsseitig eine im Querschnitt dreieckförmig umlaufende Ausnehmung 19 auf. Dadurch ergibt sich zwischen Gehäuse 17 und zweitem Dichtelement 4 ein Ausgleichsraum. Durch den Ausgleichsraum können Volumenänderungen der Dichtelemente 2, 4 kompensiert werden.

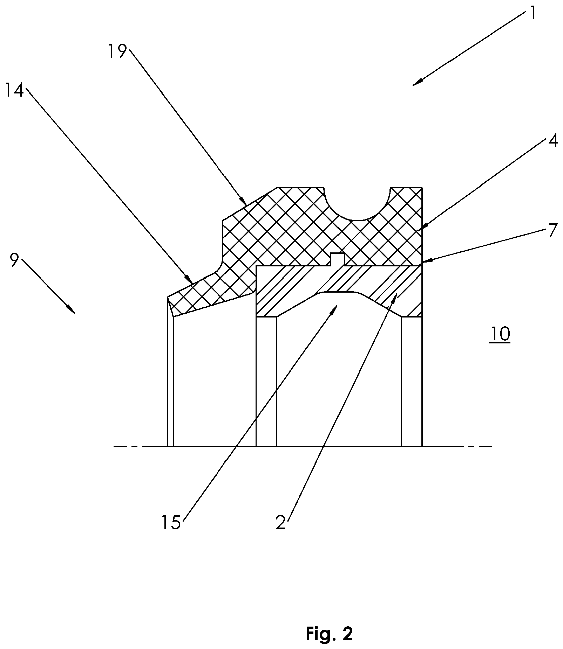

Figur 2 zeigt eine Dichtungsanordnung 1. Bei der vorliegenden Ausgestaltung ist aus dem zweiten Dichtelement 4 eine Schutzlippe 14 ausgebildet. Die Schutzlippe 14 ragt in Richtung der Umgebungsseite 9 und überdeckt dabei zumindest teilweise das erste Dichtelement 2.

Das erste Dichtelement 2 weist auf der dem Maschinenelement 3 zugewandten Seite eine trapezförmige Ausnehmung 15 auf. Dabei bilden sich an den beiden Stirnseiten des ersten Dichtelements 2 Dichtlippen, welche mit definierter radialer Vorspannung an dem Maschinenelement 3 anliegen. Eine derartig ausgebildete Dichtungsanordnung 1 eignet sich insbesondere zur Abdichtung translatorisch bewegter Maschinenelemente 3.

Die Schutzlippe 14 kann so ausgebildet sein, dass diese an dem Maschinenelement 3 zur Anlage gelangt. Die Schutzlippe 14 verhindert, dass Verschmutzungen und dergleichen in den Spalt zwischen erstem Dichtelement 2 und Maschinenelement 3 eindringen können.

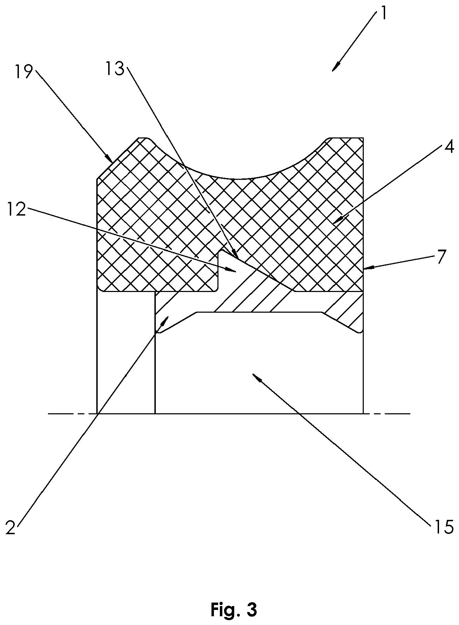

Figur 3 zeigt eine Dichtungsanordnung 1, bei der das erste Dichtelement 2 formschlüssig mit dem zweiten Dichtelement 4 verbunden ist. Bei der vorliegenden Ausgestaltung sind der Vorsprung 12 und die Vertiefung 13 sägezahnförmig ausgebildet. Das erste Dichtelement 2 weist auf der dem Maschinenelement 3 zugewandten Seite eine trapezförmige Ausnehmung 15 auf, so dass sich im Bereich der beiden Stirnseiten des ersten Dichtelements 2 Dichtlippen ergeben, welche mit radialer Vorspannung an dem Maschinenelement 3 anliegen.

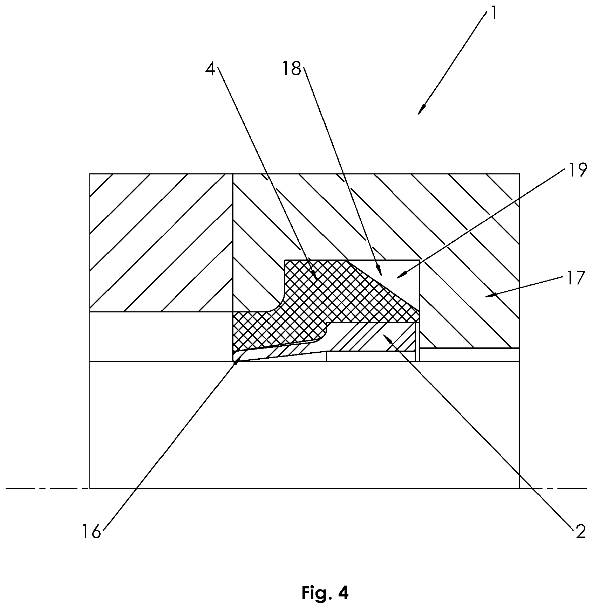

Figur 4 zeigt eine Dichtungsanordnung 1, welche als Stangendichtung ausgebildet ist und zur Abdichtung translatorisch bewegter Maschinenelemente 3 dient. Das erste Dichtelement 2 weist dabei eine in Richtung des abzudichtenden Raums 10 ragende Lippendichtung 16 auf. Des Weiteren ist in dem Gehäuse 17 ein nutförmiger Aufnahmeraum 18 vorgesehen, in welchem das erste Dichtelement 2 und das zweite Dichtelement 4 aufgenommen sind.

Das zweite Dichtelement 4 weist außenumfangsseitig eine dreieckförmige weitere Ausnehmung 19 auf, so dass sich das zweite Dichtelement 4 bei Einwirkung hoher Temperaturen oder Quellungen in den Bereich der weiteren Ausnehmung 19 hinein erstrecken kann.

## Patentansprüche

1. Dichtungsanordnung (1), umfassend ein erstes Dichtelement (2) und ein zweites Dichtelement (4), ein Gehäuse (17) mit einer Gehäusebohrung (5) sowie ein Maschinenelement (3), wobei das erste Dichtelement (2) und das zweite Dichtelement (4) in der Gehäusebohrung (5) aufgenommen sind, wobei das erste Dichtelement (2) und das zweite Dichtelement (4) den sich zwischen Gehäusebohrung (5) und Maschinenelement (3) ergebenden Spalt (6) abdichten, wobei das erste Dichtelement (2) mit radialer Vorspannung dichtend an dem Maschinenelement (3) anliegt und wobei das zweite Dichtelement (4) konzentrisch zu dem ersten Dichtelement (2) angeordnet ist und die radiale Anpressung des ersten Dichtelements (2) an das Maschinenelement (3) bewirkt, **dadurch gekennzeichnet, dass** das erste Dichtelement (2) und das zweite Dichtelement (4) zumindest auf der dem abzudichtenden Raum (10) zugewandten Stirnseite (7) entlang einer Radialebene eben ausgebildet sind und zueinander fluchten.

2. Dichtungsanordnung nach Anspruch 1, **dadurch gekennzeichnet, dass** die dem abzudichtenden Raum (10) zugewandten Stirnseiten (7) von erstem Dichtelement (2) und zweitem Dichtelement (4) kreisringförmig ausgebildet sind.

3. Dichtungsanordnung nach Anspruch 1 oder 2, **dadurch gekennzeichnet, dass** das erste Dichtelement (2) aus polymerem Werkstoff ausgebildet ist.

4. Dichtungsanordnung nach einem der Ansprüche 1 bis 3, **dadurch gekennzeichnet, dass** das zweite Dichtelement (4) aus elastomerem Werkstoff ausgebildet ist.

5. Dichtungsanordnung nach einem der Ansprüche 1 bis 4, **dadurch gekennzeichnet, dass** das erste Dichtelement (2) formschlüssig mit dem zweiten Dichtelement (4) verbunden ist.

6. Dichtungsanordnung nach einem der Ansprüche 1 bis 5, **dadurch gekennzeichnet, dass** das erste Dichtelement (2) mit einer Rückförderstruktur (8) versehen ist.

7. Dichtungsanordnung nach Anspruch 6, **dadurch gekennzeichnet, dass** die Rückförderstruktur (8) Medium in Richtung des abzudichtenden Raumes (10) fördert.

8. Dichtungsanordnung nach Anspruch 6 oder 7, **dadurch gekennzeichnet, dass** die Rückförderstruktur (8) in Richtung des abzudichtenden Raumes (10) durch einen umlaufenden Wulst (11) geschlossen ist.

9. Dichtungsanordnung nach einem der Ansprüche 1 bis 8, **dadurch gekennzeichnet, dass** sich das erste Dichtelement (2) zumindest abschnittsweise in axialer Richtung an der Gehäusebohrung (5) abstützt.

10. Dichtungsanordnung nach einem der Ansprüche 1 bis 9, **dadurch gekennzeichnet, dass** das Gehäuse (17) und das zweite Dichtungselement (4) einen Ausgleichsraum begrenzen.

11. Verwendung der Dichtungsanordnung (1) nach einem der vorherigen Ansprüche zur Abdichtung von Maschinenelementen in lebensmitteltechnischen Anlagen.

## Claims

1. Seal assembly (1) comprising a first seal element (2) and a second seal element (4), a housing (17) having a housing bore (5), and a machine element (3), wherein the first seal element (2) and the second seal element (4) are received in the housing bore (5), wherein the first seal element (2) and the second seal element (4) seal the gap (6) resulting between the housing bore (5) and the machine element (3), wherein the first seal element (2) rests on the machine element (3) so as to seal by way of a radial pre-load, and wherein the second seal element (4) is disposed so as to be concentric with the first seal element (2) and causes the radial contact pressure of the first seal element (2) on the machine element (3), **characterized in that** the first seal element (2) and the second seal element (4) are designed to be planar along a radial plane and are co-aligned at least on the end side (7) that faces the space (10) to be sealed.

2. Seal assembly according to Claim 1, **characterized in that** the end sides (7) of the first seal element (2) and the second seal element (4) that face the space (10) to be sealed are designed to be annular.

3. Seal assembly according to Claim 1 or 2, **characterized in that** the first seal element (2) is formed from a polymer material.

4. Seal assembly according to one of Claims 1 to 3, **characterized in that** the second seal element (4) is formed from an elastomeric material.

5. Seal assembly according to one of Claims 1 to 4, **characterized in that** the first seal element (2) is connected to the second seal element (4) in a form-fitting manner.

6. Seal assembly according to one of Claims 1 to 5, **characterized in that** the first seal element (2) is provided with a return conveyor structure (8).

7. Seal assembly according to Claim 6, **characterized in that** the return conveyor structure (8) conveys medium in the direction of the space (10) to be sealed.

8. Seal assembly according to Claim 6 or 7, **characterized in that** the return conveyor structure (8) in the direction of the space (10) to be sealed is closed by an encircling bead (11).

9. Seal assembly according to one of Claims 1 to 8, **characterized in that** the first seal element (2) in the axial direction is at least in portions supported on the housing bore (5).

10. Seal assembly according to one of Claims 1 to 9, **characterized in that** the housing (17) and the second seal element (4) delimit a compensation space.

11. Use of the seal assembly (1) according to one of the preceding claims for sealing machine elements in food technology systems.

## Revendications

1. Système d'étanchéité (1), comprenant un premier élément d'étanchéité (2) et un deuxième élément d'étanchéité (4), un carter (17) comportant un alésage de carter (5) ainsi qu'un élément de machine (3), le premier élément d'étanchéité (2) et le deuxième élément d'étanchéité (4) étant logés dans l'alésage de carter (5), le premier élément d'étanchéité (2) et le deuxième élément d'étanchéité (4) réalisant l'étanchéité de l'interstice (6) se produisant entre l'alésage de carter (5) et l'élément de machine (3), le premier élément d'étanchéité (2) s'appuyant avec précontrainte radiale de manière étanche contre l'élément de machine (3) et le deuxième élément d'étanchéité (4) étant disposé de manière concentrique au premier élément d'étanchéité (2) et provoquant la pression radiale du premier élément d'étanchéité (2) contre l'élément de machine (3), **caractérisé en ce que** le premier élément d'étanchéité (2) et le deuxième élément d'étanchéité (4) sont formés de manière plane le long d'un plan radial, au moins sur le côté frontal (7) tourné vers l'espace (10) devant être étanchéifié, et étant alignés l'un sur l'autre.

2. Système d'étanchéité selon la revendication 1, **caractérisé en ce que** les côtés frontaux (7), tournés vers l'espace (10) devant être étanchéifié, du premier élément d'étanchéité (2) et du deuxième élément d'étanchéité (4) sont réalisés en forme d'anneau circulaire.

3. Système d'étanchéité selon la revendication 1 ou 2, **caractérisé en ce que** le premier élément d'étanchéité (2) est réalisé à partir de matière polymère.

4. Système d'étanchéité selon l'une quelconque des revendications 1 à 3, **caractérisé en ce que** le deuxième élément d'étanchéité (4) est réalisé à partir de matière élastomère.

5. Système d'étanchéité selon l'une quelconque des revendications 1 à 4, **caractérisé en ce que** le premier élément d'étanchéité (2) est relié par complémentarité de formes au deuxième élément d'étanchéité (4).

6. Système d'étanchéité selon l'une quelconque des revendications 1 à 5, **caractérisé en ce que** le premier élément d'étanchéité (2) est doté d'une structure de retour (8).

7. Système d'étanchéité selon la revendication 6, **caractérisé en ce que** la structure de retour (8) transporte un milieu en direction de l'espace (10) devant être étanchéifié.

8. Système d'étanchéité selon la revendication 6 ou 7, **caractérisé en ce que** la structure de retour (8) est fermée par un bourrelet périphérique (11) en direction de l'espace (10) devant être étanchéifié.

9. Système d'étanchéité selon l'une quelconque des revendications 1 à 8, **caractérisé en ce que** le premier élément d'étanchéité (2) est supporté au moins dans certaines parties dans la direction axiale sur l'alésage de carter (5).

10. Système d'étanchéité selon l'une quelconque des revendications 1 à 9, **caractérisé en ce que** le carter (17) et le deuxième élément d'étanchéité (4) délimitent un espace de compensation.

11. Utilisation du système d'étanchéité (1) selon l'une quelconque des revendications précédentes pour réaliser l'étanchéité d'éléments de machine dans des installations de l'industrie alimentaire.
